# EUROPEAN PATENT SPECIFICATION

(11) **EP 2 698 189 B1**
(45) Date of publication and mention of the grant of the patent: **07.08.2019**
(21) Application number: 12180896.8
(22) Date of filing: 17.08.2012
(51) Int. Cl.: B01D 46/00, B01D 46/24

(54) **FILTER MODULE AND FILTER SYSTEM COMPRISING SAME**
FILTERMODUL UND DIESES ENTHALTENDES FILTERSYSTEM
MODULE DE FILTRE ET SYSTÈME DE FILTRE LE COMPRENANT

(43) Date of publication of application: 19.02.2014
(73) Proprietor: Pall Corporation, Port Washington, NY 11050 (US)
(72) Inventor: HEIDENREICH, Steffen, 74597 Stimpfach (DE)
(74) Representative: Hoeger, Stellrecht & Partner Patentanwälte mbB

(56) References cited:
- EP-A1- 0 090 492
- US-A- 5 114 581
- US-A- 5 318 755
- US-A- 5 536 285
- US-A1- 2002 073 666

## Description

### FIELD OF THE INVENTION

The present invention relates to a filter module, especially for gas filtration purposes, and filter system comprising the inventive filter modules.

### BACKGROUND OF THE INVENTION

For gas filtration, especially hot gas filtration processes filter modules have been suggested in the prior art in various configurations.

The U.S. patent 5,482,537 A suggests to filter high temperature gases, e.g., from a fluidized bed reactor in an assembly comprising an outer upright vessel and an inner upright vessel, the inner vessel incorporating a gas impervious peripheral wall which divides the gas volume in the outer vessel into clean and raw gas volumes. A number of monolithic ceramic filter modules are mounted in openings disposed in the peripheral walls of the inner vessel and allow clean gas to flow through the filter modules from the dirty gas volume to the clean gas volume. The clean gas is discharged from the clean gas volume via a clean gas outlet. The filter modules are of a honeycomb structure, the filter elements and clean gas ducts of which are oriented in a horizontal direction. The US patent 5,593,471 A discloses a dust collecting apparatus comprising a housing having an inlet and an outlet and one or more filter modules accommodated therein. The filter modules are of a honeycomb structure and arranged in vertical or horizontal direction. The clean gas ducts of the filter modules open into a closed chamber within the housing. The closed chamber comprises a clean gas outlet which is in fluid connection with the outlet of the housing. The apparatus further includes backwash device to deliver high pressure gas to the closed chamber in a backwash operation in order to clean the filter elements of the filter modules. US 5,536,285 discloses a hot gas filter comprising monolithic ceramic filter elements.

According to another approach filter modules in the form of tubular filter candles are used in hot gas filtration as disclosed for example in WO 00/62902 A1. A filter vessel comprises a tube sheet which divides the interior of the vessel into a raw gas and a clean gas chamber. The tube sheet comprises openings which accommodate the filter candles at one end thereof. The filter candles depend from the tube sheet into the raw gas chamber. The filter vessel further includes a backwash system for detaching the particulate matter accumulated during filtration from the filter candles.

In hot gas filtration large volumes of gases are to be dealt with requiring a substantial amount of filter area.

Typical prior art hot gas filtration systems use filter candles made of ceramic or metal material. Filter areas of these candles are limited so that for higher volume flows thousands or ten thousands of filter candles are necessary to be incorporated in housings.

This requires very big filter vessels or several vessels operated in parallel. For volume flow rates of about 1 million m³ per hour or more, use of ceramic or metallic filter candles of 2 or even 3 m length is no longer adequate.

### BRIEF SUMMARY OF THE INVENTION

An object of the present invention is to provide a filter module and a filter system comprising same which has an improved ratio of filter area per volume of the filter system and a high packing density in the filter system.

The present invention solves this object with a filter module having the characteristics of claim 1 and 2.

The key element of the present invention resides in the honeycomb structure of filter elements and regularly interposed clean gas ducts provided with a clean gas collecting and discharge arrangement extending across all of the clean gas outlets of the clean gas ducts. At the closed ends of the filter elements, i.e., the discharge side of the filter module, clean gas flow is deflected and directed transverse to the vertical of the discharge side surface of the unit(s). The deflection and direction of the clean gas flow from all the clean gas ducts is substantially uniform. Said clean gas outlets of the clean gas ducts are in fluid communication with the clean gas collecting and discharge arrangement. This allows a very efficient and compact structure of the filter modules.

Preferably, the clean gas opening is provided at a lateral face of the filter module.

### DETAILED DESCRIPTION OF THE INVENTION

The tubular wall parts of the filter elements and optionally the closed ends of the filter elements and/or the clean gas ducts of the inventive filter modules are preferably made of ceramic, metal and/or polymeric material. The porous structure may be created by sintering grains and/or fibers of such material.

The filter module comprises a multi-block structure of two or more block-shaped units arranged in parallel and connected to one another at their side faces, e.g., by gluing, welding or sintering the individual block-shaped units together or by accommodating the individual block-shaped units in a common frame structure. The block-shaped units within the frame structure are sealed against one another in order to avoid by-passes leading from the feed side of the module to the clean gas collecting and discharge arrangement.

It is especially preferred to use a frame structure to accommodate the individual block-shaped units in a multi-block embodiment in case the block-shaped units are made of ceramic material.

Preferably, the frame structure is made of metal.

The embodiments comprising a frame structure to accommodate a multiplicity of block-shaped units preferably have the clean gas collecting and discharge arrangement provided as a part of the frame structure.

The clean gas collecting and discharge arrangement typically extends substantially across the whole discharge side of the one or more block-shaped units of a filter module. Preferably, the discharge end of the clean gas collecting and discharge arrangement is about flush with a side wall of the filter module. Furthermore, the block-shaped units may be arranged back to back, i.e., their discharge sides facing each other, and sharing one common clean gas collecting and discharge arrangement.

The transverse direction in which the clean gas collecting and discharge arrangement deflects and directs the clean gas flow preferably may be oriented in an angle to the vertical of the discharge side surface of about 30° or more, more preferably about 60° or more, especially about 90°.

This angle of deflection is defined in a preferred embodiment by the orientation of a wall or walls of the channel(s) of the clean gas collecting and discharge arrangement extending across the discharge side of the block-shaped unit(s) of the filter module.

The preferable axial length of the tubular wall parts of the filter elements ranges from about 30 to about 150 mm. The preferable axial length of the tubular wall parts allows an efficient discharge of particulate matter from the filter elements during back-pulsing even when the longitudinal axis of the filter elements is in a horizontal orientation.

Such wall or walls of the channels of the clean gas collecting and discharge arrangement are arranged at a distance (clearance) to the discharge side surface of the block-shaped units from 0.3 to about 0.5 times the lengths of the tubular wall parts of the filter elements.

In case the discharge side surfaces of the block-shaped units are provided with a safety fuse element the distance (clearance) is determined as from the downstream surface of the safety fuse element instead of the discharge side surface.

In case of a back-to-back arrangement of the multiplicity of block-shaped units the discharge side surfaces of the respective other block-shaped unit(s) form such wall or walls and delimit the clean gas collecting and discharge arrangement in one direction. Typically, the distance (clearance) of the respective discharge side surfaces of two block-shaped units in a back-to-back arrangement is preferably in the range of about 0.2 to about 1.4 times the lengths of the tubular wall parts of the filter elements since the clean gas collecting and discharge arrangement receives larger volumes of clean gas. More preferably the distance (clearance) is in the range of from about 0.6 to about 1 times the length of the tubular wall parts of the filter elements. Preferably, the block-shaped units in a back-to-back arrangement are provided with their discharge side surfaces in a parallel orientation. The angle of deflection of the clean gas exiting the clean gas ducts is then about 90°. However, the block-shaped units in a back-to-back arrangement may have their discharge side surfaces arranged diverting from the parallel orientation. However, the deflecting angle for the clean gas exiting the clean gas ducts is preferably about 30° or more, more preferably about 60° or more.

The grain size typically used will have an average size of about 1 to about 450 µm. Fibers used typically have an average diameter of from about 1 to about 400 µm and an average length of from about 1 to about 50 mm.

The number of filter elements per 10 cm² cross-section of the feed side of a block-shaped unit preferably ranges from about 1 to about 100, more preferably from 2 to about 10. Typically, the same number of clean gas ducts is provided per 10 cm² cross-sectional area.

Preferably, the clean gas ducts are defined by longitudinal sections of tubular wall parts of three or more of the filter elements, i.e., the wall parts of the filter elements form the walls of the clean gas ducts. No additional structure is necessary to build the clean gas ducts.

More preferably the tubular wall parts of adjacent filter elements are in direct contact with one another delimiting the clean gas ducts between their closed and open ends.

The cross-section of the tubular wall parts of the filter elements may be of polygonal, especially rectangular, more preferably square, circular or oval shape.

The tubular wall parts have cross-sectional areas corresponding to the area of a square with an edge length of about 3 to about 20 mm, preferable of about 5 to about 10 mm. Corresponding cross-sectional areas are also preferable for filter elements designed with another rectangular, oval or circular cross-sections.

The length of the tubular wall parts of the filter elements amount to about 30 to about 200 mm, preferably about 50 to 150 mm.

Preferably, the tubular wall parts and optionally the closed ends of the filter elements and/or the clean gas ducts have a pore size of about 0.1 to about 150 µm, more preferably of about 1 to about 100 µm, most preferably of about 2 to about 10 µm.

The average porosity of the tubular wall parts and optionally of the closed ends of the filter elements and/or the clean gas ducts is in the range of about 25 to about 90 % by volume.

According to another embodiment of the inventive filter modules the tubular wall parts of the filter elements are arranged with respect to the vertical of the feed side surface, preferably at an angle from about 10° to about 60°, more preferably from about 30° to about 60°. During operation of an inventive filter module the feed side surface is typically in a vertical orientation.

The advantage of the inventive filter modules over the prior art resides especially in their ability to provide high surface areas per cubic meter consumed when such filter elements are accommodated in a housing.

Preferred filter modules according to the present invention provide a surface area of about 40 m² or more per m³ of a housing volume section, preferably about 60 m² or more per m³. When calculating this ratio, only such volume section of the housing is taken into account which is occupied by the filter modules when arranged fully operative and ready to use within the housing.

The invention further relates to filter systems comprising one or more of the inventive filter modules.

The inventive filter system typically comprises a housing accommodating one or more filter modules and preferably comprises common feed and/or discharge channels for the raw gas and the clean gas, respectively.

Preferably, the clean gas collecting and discharge arrangements of the filter modules directly discharge the clean gas into the common clean gas discharge channel of the system via their discharge ends.

### BRIEF DESCRIPTION OF THE DRAWINGS

- Figure 1A: a first representation;
- Figure 1B: a modification of the filter module of Figure 1A;
- Figure 2: a second filter module with a perspective representation;
- Figure 3: a third filter module with perspective representation;
- Figures 4A to 4C: a filter system according to the present invention in a first embodiment and details thereof;
- Figures 5A to 5C: a second embodiment of a system according to the present invention in a schematic representation and details thereof; and
- Figures 6A to 6C: a third embodiment of a system according to the present invention in a schematic representation and details thereof.

### DETAILED DESCRIPTION OF THE DRAWINGS

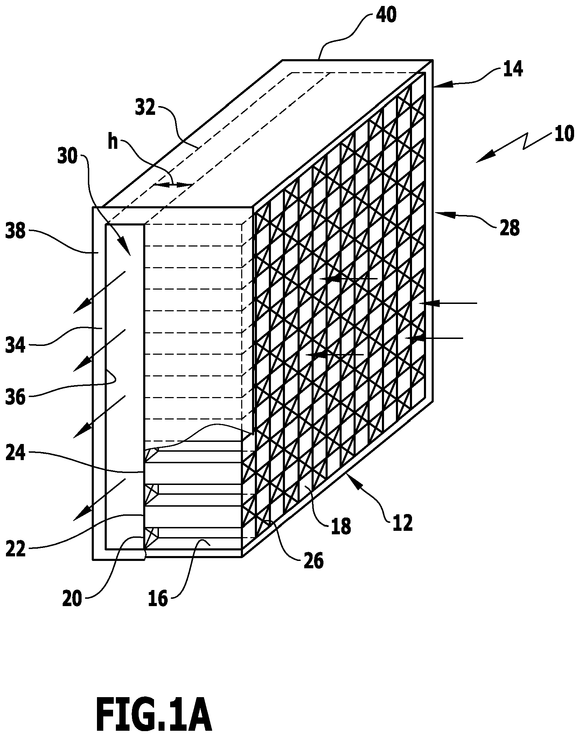

Figure 1A shows a filter module 10.

The filter module 10 comprises one block-shaped unit 12 comprising a plurality of filter elements 14 having a longitudinal, porous tubular wall part 16 with an open end 18 and a closed second end 20. The tubular wall parts 16 have a square cross-section and are arranged in a checkerboard pattern together with a plurality of clean gas ducts 22 which are substantially coextensive with, oriented parallel to and regularly interposed between the filter elements 16. The clean gas ducts 22 are open at one end 24 and closed at the other end 26 thereof. The open ends 18 of the filter elements and the closed ends 26 of the clean gas ducts form a first checkerboard pattern on the upstream or feed side surface 28 of the filter module 10. A checkerboard pattern of closed ends 20 of the filter elements 14 and the open ends 24 of the clean gas ducts is provided on the opposite or downstream face 30 of the block-shaped unit 12. This face 30 is the discharge side surface of the block-shaped unit 12. The tubular wall parts 16 of the filter elements 14 are of a porous material, e.g., sintered ceramic material, sintered metallic material or a sintered polymer material with a certain average pore size. The wall parts 16 at the same time delimit the clean gas ducts 22 along their longitudinal direction.

Raw gas entering the feed side 28 of the filter module 10 flows into the open ends of the filter elements 14, penetrates their porous tubular wall parts 16, and clean gas is received in the clean gas ducts 22 from where it is discharged at the discharge side surface 30 of the block-shaped unit 12.

On the discharge side surface of the block-shaped unit 12, a clean gas collecting and discharge arrangement 32 is provided in the form of a channel with a closed back wall and three closed lateral faces. The channel is open at the face 34 shown in the front of Figure 1A providing a clean gas discharge opening 36 of the filter module 10.

The clean gas received by the channel of the clean gas collecting and discharge arrangement 32 is deflected by about 90° and directed transverse to the vertical of the discharge side of the filter module 10 (in other words, substantially parallel to the discharge side of the filter module 10).

The clean gas exits the filter module 10 through that opening 36. The distance of the closed back wall of the channel 32 to the discharge side surface of the unit 12 (clearance h) preferably amounts to about 0.3 to about 0.5 times the axial length of the tubular wall parts 16 of the filter elements 14.

To facilitate mounting of the filter module 10 in a housing of a filter system, the filter module 10 comprises on its front side face an outwardly projecting flange 38.

Preferably the length of the tubular wall parts of the filter elements 14 is limited to about 300 mm or less, which surprisingly allows very easy cleaning of the filter module and its filter elements from particulate matter collected during filtering operation on the tubular wall parts 16.

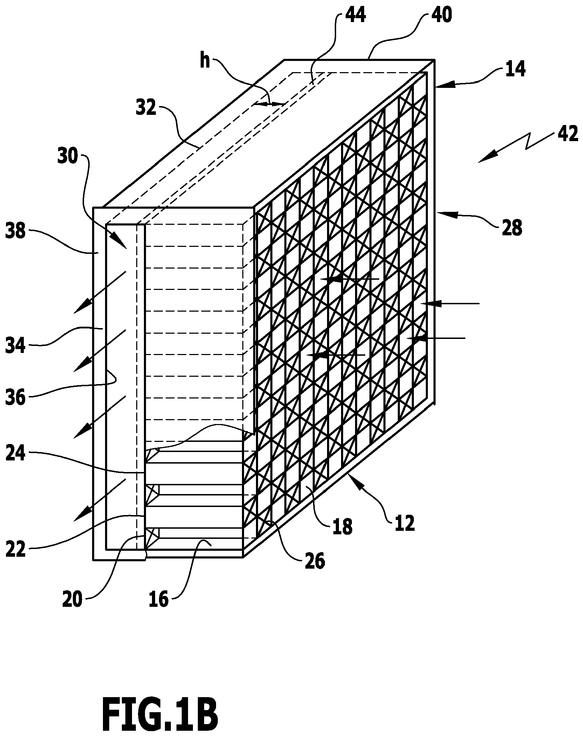

The lateral surfaces of the filter module 10 are preferably covered by a metal frame structure 40 which may incorporate the clean gas collecting and discharge arrangement 32. On one of the lateral surfaces (the front surface in Figure 1B) the frame structure 40 also provides the flange 38 and the opening 36.

Figure 1B shows a filter module 42 which is a modification of the filter module 10 of Figure 1A. Therefore, like parts are designated with the same reference numerals as used in the description of Figure 1A. In addition to the components described already with reference to Figure 1A the filter module 42 includes a safety fuse 44 in the form of a disc-shaped element covering the outlets of the clean gas ducts 22. The safety fuse 44 is substantially co-extensive with the discharge side surface. In case of failure of one or more of the filter elements, e.g., their tubular wall parts, raw gas penetrating unfiltered into the clean gas ducts cannot reach the clean gas collecting and discharge arrangement 32 without prior passing through the safety fuse 44.

The distance of the closed back wall of the channel 32 to the downstream surface of the safety fuse 44 of the unit 12 (clearance h) preferably amounts to about 0.3 to about 0.5 times the axial length of the tubular wall parts 16 of the filter elements 14.

The clean gas is received by the clean gas collecting and discharge arrangement 32 when it exits the downstream side of the safety fuse 44. The clean gas flow is then deflected by about 90° and directed parallel to the discharge side of the filter module 42.

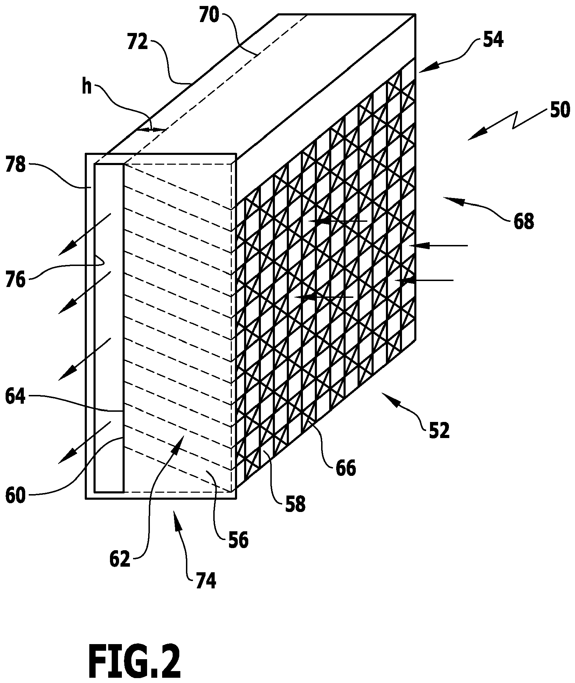

Figure 2 shows a second filter module. The filter module 50 comprises one block-shaped unit 52 comprising a plurality of filter elements 54 having a longitudinal, porous tubular wall part 56 with an open end 58 and a closed second end 60. The tubular wall parts 56 have a square cross-section and are arranged in a checkerboard pattern together with a plurality of clean gas ducts 62 which are substantially coextensive with, oriented parallel to and regularly interposed between the filter elements 54. The clean gas ducts 62 are open at one end 64 and closed at the other end 66 thereof. The open ends 58 of the filter elements and the closed ends 66 of the clean gas ducts 62 form a first checkerboard pattern on the upstream or feed side surface 68 of the filter module 50. A checkerboard pattern of closed ends 60 of the filter elements 54 and the open ends 64 of the clean gas ducts 62 is provided on the downstream side or opposite face 70 of the block-shaped unit 52. This face 70 is the discharge side surface of the block-shaped unit 52. The tubular wall parts 56 of the filter elements 54 are of a porous material, e.g., sintered ceramic material, sintered metallic material or a sintered polymer material with a certain average pore size. The wall parts 56 at the same time delimit the clean gas ducts 22 along their longitudinal direction.

Raw gas entering the feed side 68 of the filter module 50 flows into the open ends 58 of the filter elements 54, penetrates their tubular wall parts 56, and clean gas is received in the clean gas ducts 62 from where it is discharged at the discharge side surface 70 of the block-shaped unit 52.

On the discharge side surface 70 of the block-shaped unit 52, a clean gas collecting and discharge arrangement 72 is provided in the form of a single channel which is closed at three lateral faces and open at the front face 74 shown in Figure 2. When entering the clean gas collecting and discharge arrangement 72 the clean gas flow is deflected by about 90° and directed transverse to the vertical of the discharge side of the filter module 50.

The distance of the closed back wall of the channel 72 to the discharge side surface of the unit 52 (clearance h) preferably amounts to about 0.3 to about 0.5 times the axial length of the tubular wall parts 56 of the filter elements 54. The clean gas exits the filter module 50 through an opening 76 of said front face 74. To facilitate mounting of the filter module 50 in a housing of a filter system (not shown here), the filter module 50 comprises on its front side face 74 an outwardly projecting flange 78.

Preferably the length of the filter elements 14 is limited to about 300 mm or less, which surprisingly allows very easy cleaning of the filter module and its filter elements from particulate matter collected during filtering operation on the tubular wall parts 56.

In contrast to the filter module 10 of Figure 1, the filter module 50 of Figure 2 has the filter elements 54 and the clean gas ducts 62 arranged in a slightly oblique orientation to the horizontal.

In operation, the interior space of the filter elements 54 may be more easily cleaned from particulate matter which has accumulated during the filtration process because of the slanted configuration of the tubular wall parts 56 of the filter elements 54. The angle of the longitudinal axis of the tubular wall parts to the vertical of the feed surface amounts to about 25°.

Because of the slanted configuration of the filter elements 54 within the block-shaped unit 52, a somewhat lower filtration surface per volume ratio is obtained. This, however, is compensated by the improved regeneration properties of the filter module 50 which in the end allow a longer cycle time of this type of module 50 as compared to the filter module 10.

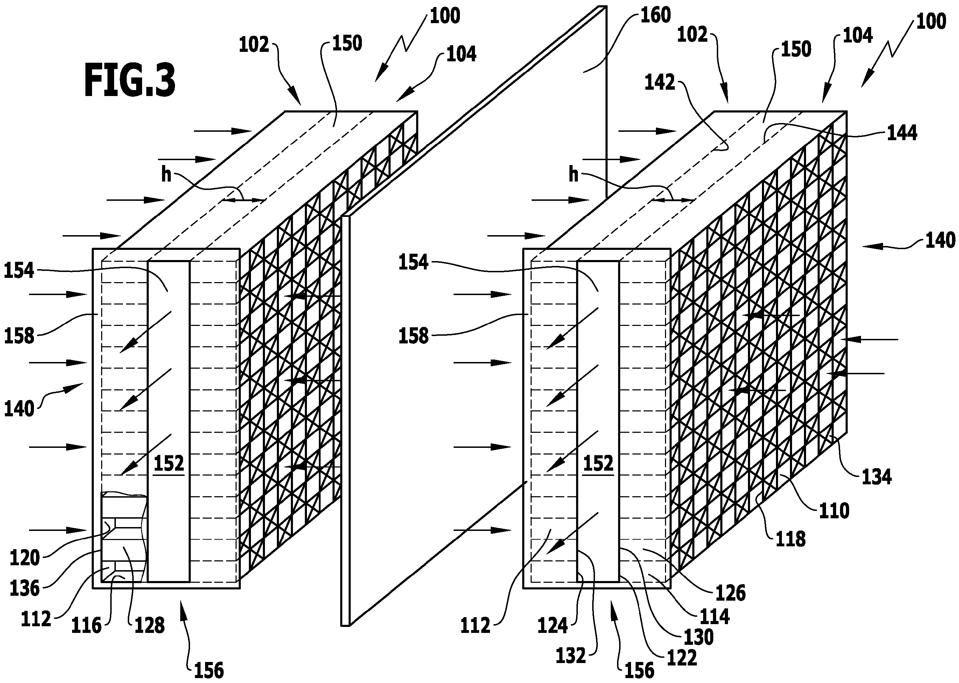

Figure 3 shows a third filter module 100. The filter module 100 comprises two block-shaped units 102, 104 arranged back-to-back which have a basic structure identical to the unit of filter module 10 of Figure 1.

The block-shaped units 102, 104 both comprise a plurality of filter elements 110, 112 having longitudinal, porous tubular wall parts 114, 116 with open ends 118, 120 and closed second ends 122, 124. The tubular wall parts 114, 116 have a square cross-section and are arranged in a checkerboard pattern together with a plurality of clean gas ducts 126, 128 which are substantially coextensive with, oriented parallel to and regularly interposed between the filter elements 110, 112. The clean gas ducts 126, 128 are open at one end 130, 132 and closed at the other end 134, 136 thereof. The open ends 118, 120 of the filter elements 110, 112 and the closed ends 134, 136 of the clean gas ducts 126, 128 form a first checkerboard pattern on the upstream or feed side surface 140 of the block-shaped units 102, 104. A checkerboard pattern of closed ends 122, 124 of the filter elements 110, 112 and the open ends 130, 132 of the clean gas ducts 126, 128 is provided on the opposite face 142, 144 of the block-shaped units 102, 104. These faces 142, 144 are the discharge side surfaces of the block-shaped units 106, 108. The tubular wall parts 114, 116 of the filter elements 110, 112 are of a porous material, e.g., sintered ceramic material, sintered metallic material or a sintered polymer material with a certain pore size. The wall parts 114, 116 at the same time delimit the clean gas ducts 126, 128 along their longitudinal direction.

Raw gas entering the feed sides 140 of the filter modules 100 flows into the open ends 118, 120 of the filter elements 110, 112, penetrates their tubular wall parts 114, 116 and clean gas is received in the clean gas ducts 126, 128 from where it is discharged at the discharge side surfaces 142, 144 of the block-shaped units 102, 104.

At the discharge side surfaces 142, 144 of the block-shaped units 102, 104 a common clean gas collecting and discharge arrangement 150 is provided which is delimited by the discharge side surfaces 142, 144 and three closed lateral surfaces. The arrangement 150 is open at the front face 152 shown in Figure 3 and provides the discharge opening 154 of the filter module 100. The clean gas received by the clean gas collecting and discharge arrangement 150 is deflected by 90°, directed parallel to the discharge side surfaces of the of units 102, 104 and exits the filter module 100 through an opening 154.

To facilitate mounting of the filter modules 100 in a housing of a filter system, the filter modules 100 comprises on their front faces 156 an outwardly projecting flange 158.

Preferably the length of the tubular wall parts of the filter elements 110, 112 is limited to about 300 mm or less, which surprisingly allows very easy cleaning of the filter module and its filter elements from particulate matter collected during filtering operation on the tubular wall parts 114, 116.

After back-pulsing, the filter modules 100 may be again operated in the filtration mode of a filtering system without having been removed from the filtering system.

However, in contrast to the filter module 10 of Figure 1A, the filter module 100 of Figure 3 has the two of the block-shaped units 102, 104 arranged in a back-to-back configuration such that the closed ends of the filter elements face each other, and so do the open ends of the clean gas ducts.

Optionally, the discharge side surfaces of the back-to-back oriented block-shaped units may be provided with a safety fuse element as described in connection with Figure 1B.

Therefore, one common clean gas collecting and discharge arrangement 150 is sufficient to collect and discharge the clean gas provided by both block-shaped units 102, 104 in the direction to the front side faces 156 of the filter modules 100 where it exits the opening 152 to be discharged from a filtration system comprising these block-shaped modules 100. The distance between the discharge side surfaces (clearance) is typically lager than the clearance of the clean gas collecting and discharge arrangements described in connection with Figures 1 and 2, since clean gas is received simultaneously from two block-shaped units.

As mentioned before, typically, the filter modules of the present invention are used in a multiplicity accommodated in a common housing. This situation is shown schematically in Figure 3.

The filter modules 10 and 50 of Figure 1 and Figure 2 can easily be arranged in a configuration where the front surfaces 28, 68 are all facing the same direction, e.g., to the back wall of the channel of the clean gas collecting and discharge arrangement of an adjacent filter module. Upon back-pulsing the detached particulate matter from the filter elements may easily be discarded and removed from a filtration system incorporating such filter elements 10 or 50.

A precautionary measure has to be taken in an arrangement of filter modules 100 as shown in Figure 3.

Upon back-pulsing, in the arrangement of the filter modules 100, a cross-contamination of the two filter modules could occur, and therefore, it is preferable to have a partition plate 160 arranged in between the two feed faces of the filter modules 100.

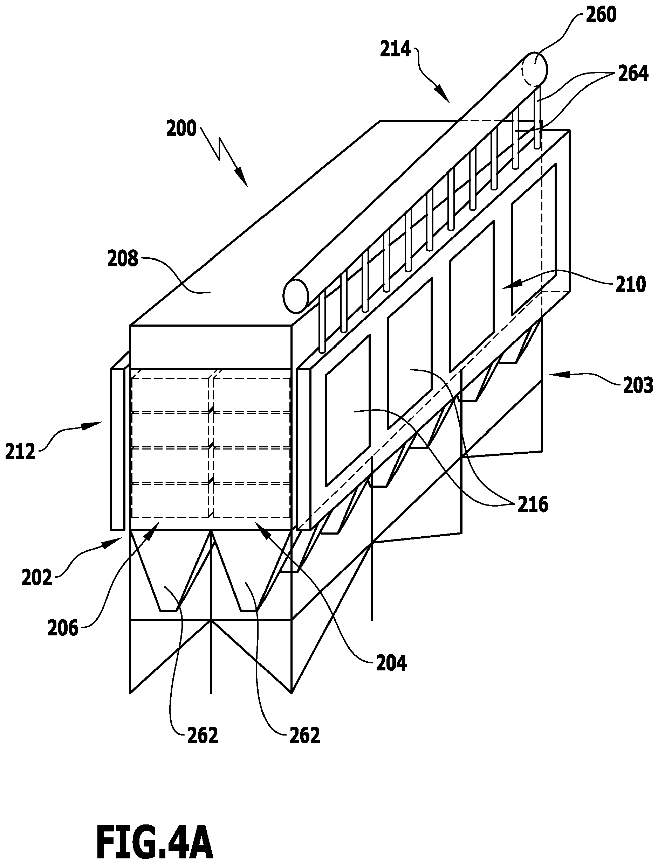

Figure 4A shows a first embodiment of a filtration system 200 according to the present invention. The filter system 200 comprises a housing 202 which is of an elongated box-shaped configuration. The housing 202 is supported on a base frame 203.

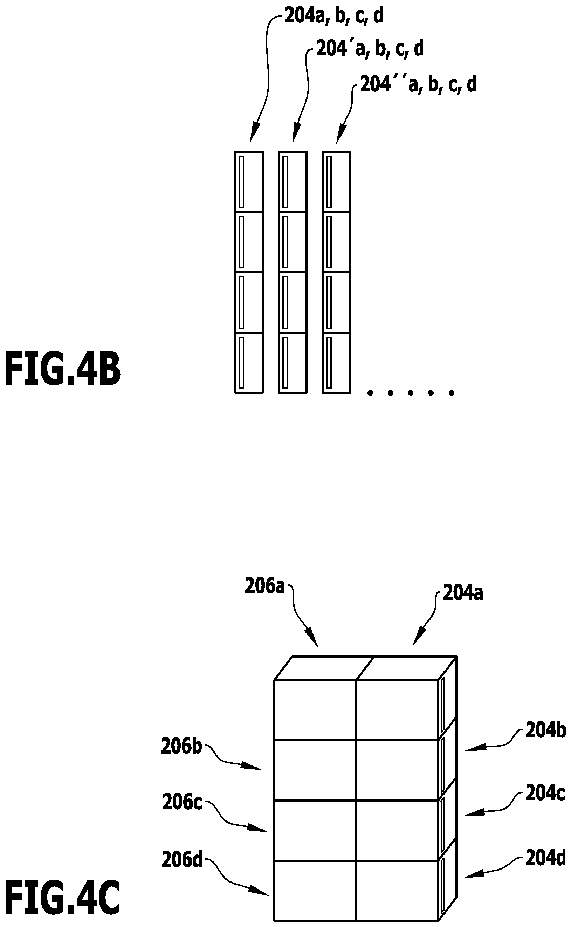

Within the box-shaped housing 202, two rows of a plurality of filter module stacks 204, 204', 204", ... and 206, 206', 206", ... are arranged with the discharge openings of the filter modules of the two rows facing in opposite directions. Along the longitudinal axis of the box-shaped housing 202 the stacks are arranged in parallel at a certain distance from each other (cf. Figures 4B and 4C).

Within an individual stack 204, 206 of filter modules 204 a, b, c, d and 206a, b, c, d, respectively, the filter modules may be mutually fixed to one another by gluing, welding or sintering them together or by mounting them in a framing.

In an exemplary layout of the filter system 200 the feed side of a filter module 204a, 206a may have length 1500 mm and a height of 1000 mm, the depth of the filter module may be about 200 mm. Such filter module may comprise, for example, 24 block-shaped units the feed side surface of which may have the size of 250 mm x 250 mm, the length of the tubular wall parts of the filter elements being about 140 mm. The clearance h of the clean gas collecting and discharge channel would amount to about 60 mm.

The distance between two adjacent stacks 204 and 204' or 206 and 206' of filter modules may be set, for example, to about 100 mm.

The housing comprises on its top surface a raw gas supply channel 208 which feeds raw gas into the housing 202 and its stacked filter modules 204, 206. The raw gas supply channel 208 has a decreasing cross-sectional area from the front end shown in front of Figure 4A to the remote dead end located at the rear end 214 of the system 200.

On both side faces in longitudinal direction, the housing 202 comprises clean gas discharge channels 210, 212 which open at the rear end 214 of the system 200 where the clean gas may be discharged.

In order to accommodate the increasing amount of clean gas received from the multiple filter module stacks 204, 206 along the longitudinal axis of the housing 202, the cross-section of the clean gas discharge channels 210, 212 increases gradually in the direction of the rear end 214 of the system 200.

The clean gas discharge channels 210, 212 can in accordance with one variant be removable as a whole when the filter module stacks 204, 206 have to be exchanged. Alternatively, as shown in Figure 4A the clean gas discharge channels 210, 212 may be provided with number of doors 216 which allow access to the filter modules and exchanging same without complete removal of the clean gas discharge channels 210, 212.

The system 200 incorporates a back-pulsing facility receiving back-pulsing gas by a pipe 260 which is shown schematically only. Figure 4A only shows pipe 260 which provides back-pulsing gas to the filter modules of the stacks 204 for regeneration of the same. A corresponding pipe is needed (not shown) for regeneration of the stacks 206.

Extending from the back-pulsing gas pipe 260 a plurality of back pulse supply tubes 264 direct the blow-back gas to the various filter module stacks 204, 204', 204", ....

The back-pulsing pressure supplied via the clean gas openings into the stacked individual filter modules 204a, 204b, 204c, 204d and 206a, 206b, 206c, 206d detaches particulate matter which has been collected during the filtration operation from the filter elements of these filter modules.

The particulate matter discharged during back-pulsing is collected in conically shaped dust collectors 262 arranged at the bottom of housing 202.

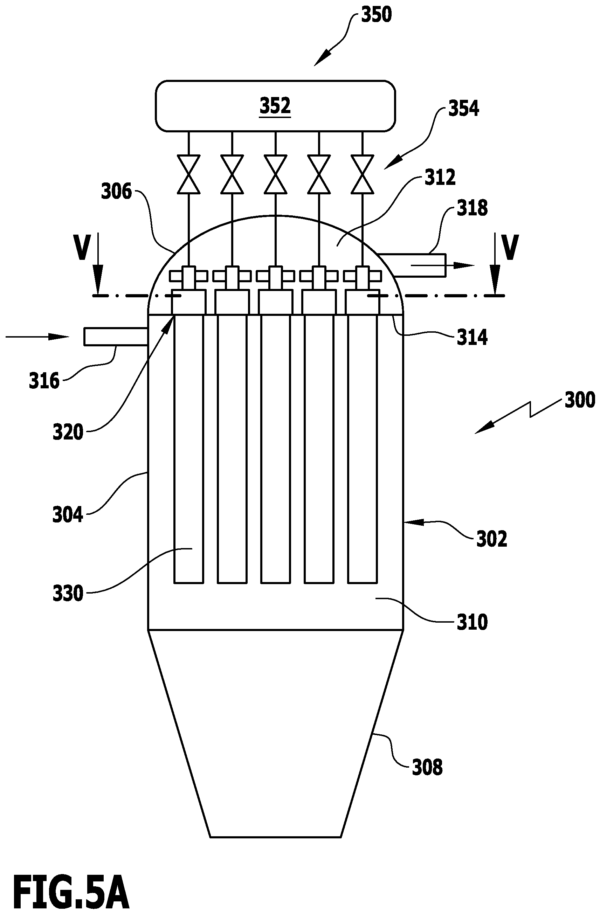

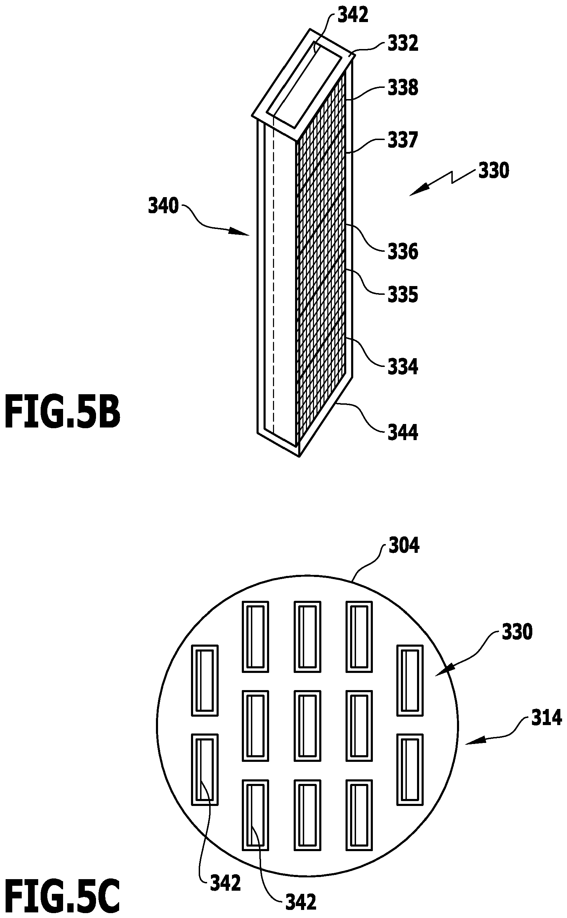

In Figure 5A, a second embodiment of an inventive filter system 300 is shown comprising a housing 302 which essentially consists of a cylindrical wall portion 304 which is closed at its upper end by a dome-shaped cover 306 and connected at its lower end to a dust collector 308 with a conical shape.

The housing 302 is divided into a raw gas chamber 310 and a clean gas chamber 312 by a tube sheet 314 which spans across the whole cross-section of the cylindrical wall portion 304 at its upper end.

The raw gas chamber 310 is accessible via a feed gas inlet 316 through which raw gas can be introduced into the raw gas chamber 310.

The dome-shaped portion 306 of the housing 302 comprises a clean gas outlet 318 through which clean gas may be discharged.

The tube sheet 314 comprises a plurality of rectangular openings 320 which accommodate a plurality of candle-shaped filter modules 330 according to the present invention.

The candle-shaped filter modules 330 are shown in more detail in Figure 5B and comprise at their upper end an outwardly extending circumferential flange 332 which serves for mounting the filter modules 330 within the openings 320 of the tube sheet 314 in a downwardly pending manner.

The individual filter modules 330 comprise five block-shaped units 334, 335, 336, 337 and 338 stacked on top of one another, all facing with their feed side to the left as shown in Figure 5B. The block-shaped units 334 to 338 have about the same configuration as shown in Figure 1 so that a more detailed explanation in that respect is omitted here. The block-shaped units 334 to 338 may be assembled in a common frame structure 344 holding the units together and providing a common clean gas channel 340. The top surface of the common frame structure 344 may integrally incorporate the flange 332 and provide the opening 342.

On the discharge side surface opposite to the feed side surface, the block-shaped units 334 to 338 are covered by a common clean gas collecting and discharge arrangement which essentially consists of one clean gas channel 340 which is open at its upper end 342 in order to discharge the clean gas into the clean gas chamber 312 of housing 302. Similar to what has been shown in Figure 1B and described in the context therewith the filter modules 330 may be provided with disc-shaped safety fuse elements extending across the whole discharge side surface of the filter module (not shown in Figures 5A to 5C).

The candle-type filter modules 330 are arranged in the tube sheet 314 in a parallel, staggered arrangement where the feed sides of the individual filter modules face the clean gas channels of neighboring filter modules 330.

Therefore, upon back-pulsing, when particulate matter is detached from the filter elements of the block-shaped units of the filter modules, no cross-contamination between neighboring filter modules 330 can occur.

For regenerating the individual filter modules 330, the filter system 300 includes a back-pulsing system 350 comprising a pressure source 352 as well as a plurality of supply lines 354 which end within the dome-shaped cover 306 above the individual filter modules 330.

The particulate matter which is detached from the filter elements of the filter modules 330 is collected by gravity within the dust collecting cone-shaped housing portion 308.

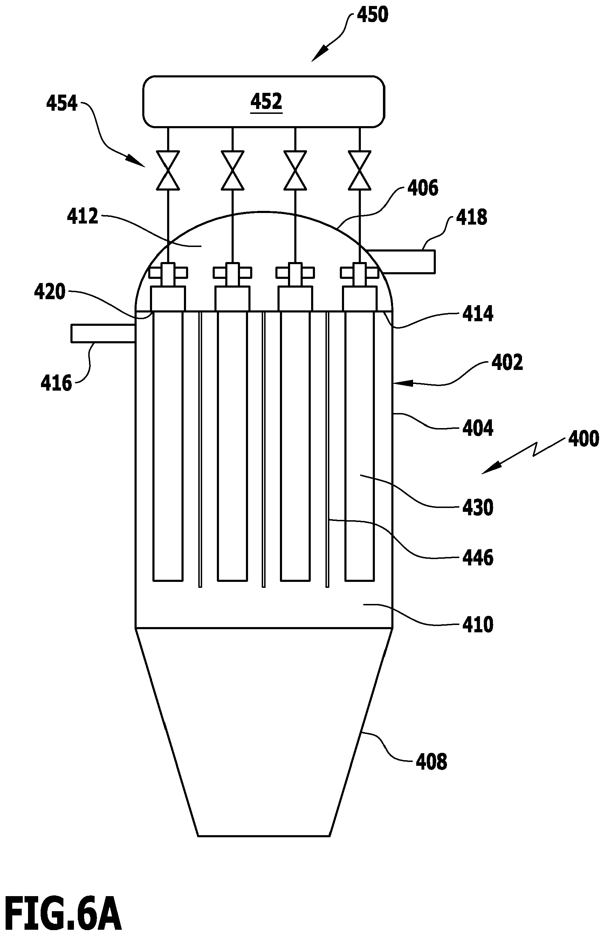

A similar inventive system of a third embodiment is shown in Figure 6A.

In Figure 6A, a third embodiment of an inventive filter system 400 is shown comprising a housing 402 which essentially consist of a cylindrical wall portion 404 which is closed at its upper end by a dome-shaped cover 406 and connected at its lower end to a dust collector 408 with a conical shape.

The housing 402 is divided into a raw gas chamber 410 and a clean gas chamber 412 by a tube sheet 414 which spans across the whole cross-section of the cylindrical wall portion 404 at its upper end.

The raw gas chamber 410 is accessible via a feed gas inlet 416 through which raw gas can be introduced into the raw gas chamber 410.

The dome-shaped portion 406 of the housing 402 comprises a clean gas outlet 418 through which clean gas may be discharged.

The tube sheet 414 comprises a plurality of rectangular openings 420 which accommodate a plurality of candle-shaped filter modules 430 according to the present invention.

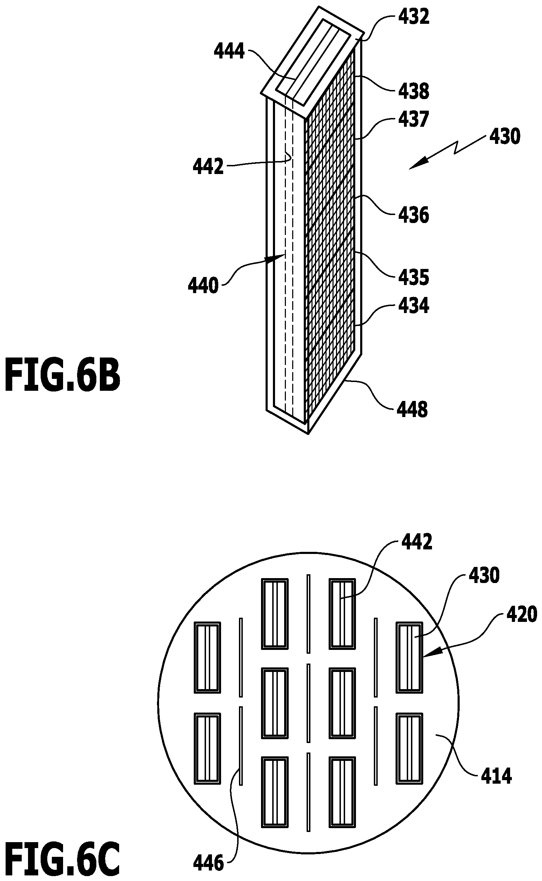

The candle-type filter modules 430 are shown in more detail in Figure 6B and comprise at their upper end an outwardly extending circumferential flange 432 which serves for mounting the filter modules 430 within the openings 420 of the tube sheet 414 in a downwardly pending manner.

The individual filter modules 430 comprise five pairs of back-to-back positioned block-shaped units 434, 435, 436, 437 and 438 stacked on top of one another. The paired units 434 to 438 have about the same configuration as shown in Figure 3 so that a more detailed explanation in that respect is omitted here. The paired block-shaped units 434 to 438 may be glued, welded or sintered together or accommodated in a common frame structure.

A clean gas collecting and discharge arrangement 440 substantially consisting of one clean gas channel 442 common for all paired block-shaped units 434 to 438 is positioned in between the back-to-back positioned units with an opening 444 at the upper end of the module 430 for discharge of the clean gas into the clean gas chamber 412 of the housing 402.

Optionally the block-shaped units of the filter module 430 may be provided with safety fuses on the discharge side surfaces (nor shown) as has been explained in connection with Figure 3 already.

The candle-type filter modules 430 are arranged in the tube sheet 414 in a parallel, staggered arrangement as is apparent from Figure 6C. Since inevitably the feed sides of the individual filter modules will face one another partition plates 446 have been provided between adjacent filter modules 430.

The block-shaped units 434 to 438 are assembled in a common frame structure 448 holding the units sealingly together and providing a common clean gas channel 440. The top surface of the frame structure 448 may integrally incorporate the flange 432 and provide the opening 444.

For back-pulsing the individual filter modules 430, the filter system 400 includes a back-pulsing system 450 comprising a pressure source 452 as well as a plurality of supply lines 454 which end within the dome-shaped cover 406 above the individual filter modules 430.

The particulate matter which is detached from the filter elements of the filter modules 430 is collected by gravity within the dust collecting cone-shaped housing portion 408.

Upon back-pulsing, when particulate matter is detached from the filter elements 430, no cross-contamination between neighboring filter modules 430 can occur since their feed faces are shielded by the partition plates 446.

The advantages of the present invention shall be explained in some more detail by way of exemplary designs which are compared with prior art systems comprising tubular candle filter modules.

In a first prior art system a filter surface area of 3325 m² is provided by 7200 filter candles of a standard geometry of an outer diameter of 60 mm and a length of 2500 mm. In order to accommodate this large number of tubular filter candles a filter vessel with a foot print of 63.7 m² (corresponding to, e.g., a rectangular area of 3.5 m x 18.2 m) is needed. The filtration surface area to foot print ratio calculates as 52.

An inventive system of the type of Figure 4A may be set up using stacked filter modules 204, 204', 204", ... and 206, 206', 206", ... as follows:
The filter module stacks have a height of 4000 mm comprising 4 filter modules as described in connection with Figures 4A to 4C. The block-shaped units consist of filter elements with tubular wall parts having a length of 140 mm and a square cross-sectional area of their tubular wall parts of 10 mm x 10 mm.

The number of modules needed to provide the filter surface area of at least about 3325 m² is 128 which requires a foot print for such a system of 17.5 m² (corresponding to, e.g., 3.5 m x 5 m). The ratio of filtration surface area to foot print corresponds to 190.

In a further example of a prior art system using 51 tubular candle type filter modules of a standard geometry of an outer diameter of 60 mm and a length of 2500 mm a filter surface area of 23.5 m² is provided. A housing accommodating these 51 tubular candle type filter modules with an operatively needed distance in between adjacent filter modules of 30 mm a volume of 0.9 m³ is needed (the calculation does not take into account the volume occupied by the dust collector). This corresponds to a ratio of filter surface area to volume of about 26.

In case the volume of a housing of 0.9 m³ operatively accommodates filter modules as shown in Figure 1A having length of the filter elements of 140 mm and square tubular wall parts of 10 mm x 10 mm a filter surface area of about 67 m² can be provided. The calculated ratio of filtration surface area to volume amounts to about 74.

## Claims

1. A filter module (10), especially for gas filtration purposes, the filter module (10) comprising
two or more block-shaped units (12) arranged in parallel and connected to one another at their side faces, each unit comprising
a plurality of filter elements (14) having a longitudinal, porous tubular wall part (16) having an open first end (18) serving as a raw gas inlet and a closed second end (20), wherein said filter elements (14) are arranged coextensive and in parallel orientation with their tubular wall parts (16), their open ends (18) being all located on one side of the filter module (10) serving as a feed side thereof, and
a plurality of clean gas ducts (22) which are substantially coextensive with, oriented parallel to, and regularly interposed between the filter elements (14), the clean gas ducts (22) being open at one end (24) forming a clean gas outlet and closed at their opposite end (26), whereas the closed ends (26) of the clean gas ducts (22) being located at the feed side of the filter module (10), and whereas their open ends (24) are located adjacent to a discharge side of the filter module (10) opposite to the feed side of the filter module (10);
wherein said open ends (18) of the filter elements (14) and said closed ends (26) of the clean gas ducts (22) form a feed side surface of a block-shaped unit (12), and wherein said open ends (24) of the clean gas ducts (22) and said closed ends (20) of the filter elements (14) form a discharge side surface of a block-shaped unit (12);
wherein the tubular wall parts of the filter elements (14) have a cross-sectional area corresponding to the area of a square with an edge length of 3 to 20 mm; and wherein the length of the tubular wall parts of the filter elements (14) amounts to 30 to 200 mm;
said filter module (10) further comprising at the discharge side a clean gas collecting and discharge arrangement (32) extending across all of the clean gas outlets of the clean gas ducts (22) of the one or more units (12) and providing a clean gas discharge opening (36) for the filter module (10), said clean gas collecting and discharge arrangement (32) comprising one or more clean gas channels in fluid communication with said clean gas outlets of the clean gas ducts (22) deflecting and directing the clean gas flow from the open ends of the clean gas ducts (22) in a direction transverse to the vertical of the discharge side surface,
and wherein the one or more channels of the clean gas collecting and discharge arrangement (32) have a height, measured as the clearance in the direction of the vertical of the discharge side surface of the block-shaped unit(s) (12), in the range of from 0.3 to 0.5 times the length of the tubular wall parts of the filter elements (14).

2. A filter module (100), especially for gas filtration purposes, the filter module (100) comprising
block-shaped units (102;104), each unit (102;104) comprising
a plurality of filter elements (110;112) having a longitudinal, porous tubular wall part (114;116) having an open first end (118;120) serving as a raw gas inlet and a closed second end (122;124), wherein said filter elements (110;112) are arranged coextensive and in parallel orientation with their tubular wall parts (114;116), their open ends (118;120) being all located on a side of the filter module (100) serving as a feed side thereof, and
a plurality of clean gas ducts (126;128) which are substantially coextensive with, oriented parallel to, and regularly interposed between the filter elements (110;112); the clean gas ducts (126;128) being open at one end forming a clean gas outlet and closed at their opposite end, whereas the closed ends of the clean gas ducts being located at a feed side of the filter module (100), and whereas their open ends are located adjacent to a discharge side of the filter module (100) opposite to a feed side of the filter module (100);
wherein said open ends of the filter elements (110;112) and said closed ends of the clean gas ducts (126;128) form a feed side surface of a block-shaped unit (102;104), and wherein said open ends of the clean gas ducts (126;128) and said closed ends of the filter elements (110;112) form a discharge side surface of a block-shaped unit (102;104);
wherein the tubular wall parts of the filter elements (110;112) have a cross-sectional area corresponding to the area of a square with an edge length of 3 to 20 mm; and wherein the length of the tubular wall parts of the filter elements (110;112) amounts to 30 to 200 mm; wherein said block shaped units (102; 104) comprise two or more first block-shaped units arranged in parallel and connected to one another at their side faces, the filter elements (110;112) of which opening in a first direction and
two or more second block-shaped units arranged in parallel and connected to one another at their side faces, the filter elements (110;112) of which open in a second direction,
the first and second block-shaped units (102;104) being arranged back-to-back with their discharge side surfaces and spaced apart from and facing one another;
said filter module (100) further comprising a clean gas collecting and discharge arrangement (150) extending across all of the clean gas outlets of the clean gas ducts and providing a clean gas discharge opening for the filter module (100), said clean gas collecting and discharge arrangement (150) comprising one or more clean gas channels in fluid communication with said clean gas outlets of the clean gas ducts (126;128) deflecting and directing the clean gas flow from the open ends of the clean gas ducts (126;128) in a direction transverse to the vertical of the discharge side surfaces;
said clean gas collecting and discharge arrangement (150) being positioned in between said first and second block-shaped units (102;104) receiving clean gas from the first and second block-shaped units (102;104); the one or more channels of the clean gas collecting and discharge arrangement (150) have a height, measured as the clearance in the direction of the vertical of the discharge side surfaces of the block-shaped unit(s), in the range of from 0.2 to 1.4 times, preferably about 0.6 to about 1 times the length of the tubular wall parts of the filter elements (110;112).

3. The filter module (10;100) according to claim 1 or 2, the module (10;100) is designed as a candle type filter module, comprising at one end thereof said clean gas discharge opening provided by the clean gas collecting and discharge arrangement, preferably further comprising at said one end a mounting flange (38;158).

4. The filter module (10;100) according to any one of claims 1 to 3, wherein the clean gas ducts are defined by longitudinal sections of tubular wall parts of three or more of the filter elements (14;110;112), preferably wherein the tubular wall parts of adjacent filter elements are in direct contact with one another delimiting the clean gas ducts between their closed and open ends.

5. The filter module (10;100) according to any one of claims 1 to 4, wherein the cross section of the tubular wall parts of the filter elements (14;110; 112) is of a polygonal, circular or oval shape.

6. The filter module (10;100) according to any one of claims 1 to 5, wherein the tubular wall parts have a cross-sectional area corresponding to the area of a square with an edge length of about 5 to about 10 mm.

7. The filter module (10;100) according to any one of claims 1 to 6, wherein the length of the tubular wall parts of the filter elements (14;110;112) amounts to about 50 to about 150 mm.

8. The filter module (10;100) according to any one of claims 1 to 7, wherein the tubular wall parts and optionally the closed ends of the filter elements (14;110;112) and/or the clean gas ducts have an average pore size of about 0.1 to about 150 µm, preferably of about 1 to about 100 µm, more preferably of about 2 to about 10 µm.

9. The filter module (10;100) according to any one of claims 1 to 8, wherein the tubular wall parts and optionally the closed ends of the filter elements (14;110;112) and/or the clean gas ducts are made of a ceramic material, metal or plastic material.

10. The filter module (10;100) according to any one of claims 1 to 9, wherein the tubular wall parts of the filter elements (14;110;112) are arranged with respect to the vertical of the feed side surface of the filter module at an angle of from about 10° to about 60°, preferably from about 30° to about 60°.

11. The filter module (10;100) according to any one of claims 1 to 10, wherein the one or more channels of the clean gas collecting and discharge arrangement are oriented with their longitudinal direction in an angle of about 30° or more, preferably of about 60° or more, more preferably of about 90° to the surface of the discharge side of the filter module.

12. The filter module (10;100) according to any one of claims 1 to 11, wherein the block-shaped units (12;102;104) comprise a safety fuse element extending across the open ends of the clean gas ducts.

13. The filter module (10;100) according to any one of claims 1 to 12, wherein the one or more channels of the clean gas collecting and discharge arrangement (32;150) are closed at one end and open at the opposite end and optionally have a cross-sectional area which increases from the closed end of the channel(s) to the open, opposite end of the channel(s).

14. A filter system (200;300;400) comprising
a housing (202;302;402) comprising a raw gas and a clean gas chamber as well as two or more filter modules (204;330;430) according to any one of claims 1 to 13,
said housing (202;302;402) of the filter system (200;300;400) comprising an interior space separated into a raw gas and a clean gas chamber, said filter modules being arranged within said interior space, the feed side of the modules oriented substantially vertical, said feed sides of the filter modules being in fluid communication with the raw gas chamber and said clean gas discharge openings of the filter modules being in fluid communication with the clean gas chamber of the housing, and wherein the filter modules are accommodated in the housing with a parallel orientation of their feed sides, the system optionally comprising a back-pulse arrangement (260;350;450).

15. The filter system (300;400) of claim 14, wherein the housing (302;402) comprises a tube sheet (414) separating the interior of the housing (302; 402) into the raw gas and clean gas chamber, said tube sheet (314;414) comprising openings accommodating the two or more filter modules (330;430), preferably in parallel orientation to one another.

16. The filter system (200;300) of claim 14 or 15, wherein the feed side of one module facing the discharge side of an adjacent module, the filter modules being preferably arranged in a staggered configuration.

17. The filter system (200;400) of claim 14 or 15, wherein the feed sides of one module facing the feed side of an adjacent module, preferably the system further includes partition plates positioned in between two adjacent filter modules.

18. The filter system (200) according to any one of claims 14 to 17, wherein two or more filter modules are mounted in a common rack (203) and preferably having their clean gas collecting and discharge arrangements fluidly connected to one another, preferably the system comprises a clean gas discharge channel into which the discharge ends of the clean gas collecting and discharge arrangements substantially directly feed the clean gas.

## Patentansprüche

1. Filtermodul (10), insbesondere für Gasfiltrationszwecke, wobei das Filtermodul (10) umfasst:
zwei oder mehr blockförmige Einheiten (12), welche parallel zueinander angeordnet und an ihren Seitenflächen miteinander verbunden sind, wobei jede Einheit umfasst:
eine Mehrzahl von Filterelementen (14) mit einem sich in einer Längsrichtung erstreckenden, porösen rohrförmigen Wandteil (16) mit einem offenen ersten Ende (18), welches als ein Rohgaseinlass dient, und einem geschlossenen zweiten Ende (20), wobei die Filterelemente (14) koextensiv mit ihren rohrförmigen Wandteilen (16) und parallel zu diesen ausgerichtet angeordnet sind, wobei ihre offenen Enden (18) alle auf einer Seite des Filtermoduls (10) angeordnet sind, die als eine Zufuhrseite desselben dient, und
eine Mehrzahl von Reingaskanälen (22), welche im Wesentlichen koextensiv mit den Filterelementen (14) sind, parallel zu denselben ausgerichtet und regelmäßig zwischen denselben angeordnet sind, wobei die Reingaskanäle (22) an einem Ende (24) offen sind, welches einen Reingasauslass bildet, und an ihrem gegenüberliegenden Ende (26) geschlossen sind, während die geschlossenen Enden (26) der Reingaskanäle (22) an der Zufuhrseite des Filtermoduls (10) angeordnet sind und während ihre offenen Enden (24) benachbart zu einer der Zufuhrseite des Filtermoduls (10) gegenüberliegenden Austragseite des Filtermoduls (10) angeordnet sind;
wobei die offenen Enden (18) der Filterelemente (14) und die geschlossenen Enden (26) der Reingaskanäle (22) eine zufuhrseitige Oberfläche einer blockförmigen Einheit (12) bilden, und wobei die offenen Enden (24) der Reingaskanäle (22) und die geschlossenen Enden (20) der Filterelemente (14) eine austragseitige Oberfläche einer blockförmigen Einheit (12) bilden;
wobei die rohrförmigen Wandteile der Filterelemente (14) eine Querschnittsfläche korrespondierend zu der Fläche eines Quadrats mit einer Kantenlänge von 3 bis 20 mm aufweisen und wobei die Länge der rohrförmigen Wandteile der Filterelemente (14) 30 bis 200 mm beträgt;
wobei das Filtermodul (10) ferner auf der Austragseite eine Reingas-Sammel- und -Austraganordnung (32) umfasst, welche sich über alle Reingasauslässe der Reingaskanäle (22) der einen oder der mehreren Einheiten (12) erstreckt und eine Reingasaustragöffnung (36) für das Filtermodul (10) bereitstellt, wobei die Reingas-Sammel- und -Austraganordnung (32) einen oder mehrere Reingaskanäle in Fluidverbindung mit den Reingasauslässen der Reingaskanäle (22) umfasst, welche den Reingasstrom von den offenen Enden der Reingaskanäle (22) in einer Richtung quer zur Vertikalen der austragseitigen Oberfläche umlenkt und richtet,
und wobei der eine oder die mehreren Kanäle der Reingas-Sammel- und -Austraganordnung (32) eine Höhe, gemessen als der Freiraum in der Richtung der Vertikalen der austragseitigen Oberfläche der blockförmigen Einheit(en) 12, im Bereich des 0,3- bis 0,5-Fachen der Länge der rohrförmigen Wandteile der Filterelemente (14) aufweisen.

2. Filtermodul (100), insbesondere für Gasfiltrationszwecke, wobei das Filtermodul (100) umfasst:
blockförmige Einheiten (102; 104), wobei jede Einheit (102; 104) umfasst:
eine Mehrzahl von Filterelementen (110; 112) mit einem sich in einer Längsrichtung erstreckenden, porösen rohrförmigen Wandteil (114; 116) mit einem offenen ersten Ende (118; 120), welches als ein Rohgaseinlass dient, und einem geschlossenen zweiten Ende (122; 124), wobei die Filterelemente (110; 112) koextensiv mit ihren rohrförmigen Wandteilen (114; 116) und parallel zu diesen ausgerichtet angeordnet sind, wobei ihre offenen Enden (118; 120) alle auf einer Seite des Filtermoduls (100) angeordnet sind, die als eine Zufuhrseite desselben dient, und
eine Mehrzahl von Reingaskanälen (126; 128), welche im Wesentlichen koextensiv mit den Filterelementen (110; 112) sind, parallel zu denselben ausgerichtet und regelmäßig zwischen denselben angeordnet sind; wobei die Reingaskanäle (126; 128) an einem Ende offen sind, welches einen Reingasauslass bildet, und an ihrem gegenüberliegenden Ende geschlossen sind, während die geschlossenen Enden der Reingaskanäle an einer Zufuhrseite des Filtermoduls (100) angeordnet sind und während ihre offenen Enden benachbart zu einer Austragseite des Filtermoduls (100), welche einer Zufuhrseite des Filtermoduls (100) gegenüberliegt, angeordnet sind;
wobei die offenen Enden der Filterelemente (110; 112) und die geschlossenen Enden der Reingaskanäle (126; 128) eine zufuhrseitige Oberfläche einer blockförmigen Einheit (102; 104) bilden, und wobei die offenen Enden der Reingaskanäle (126; 128) und die geschlossenen Enden der Filterelemente (110; 112) eine austragseitige Oberfläche einer blockförmigen Einheit (102; 104) bilden;
wobei die rohrförmigen Wandteile der Filterelemente (110; 112) eine Querschnittsfläche korrespondierend zu der Fläche eines Quadrats mit einer Kantenlänge von 3 bis 20 mm aufweisen und wobei die Länge der rohrförmigen Wandteile der Filterelemente (110; 112) 30 bis 200 mm beträgt;
wobei die blockförmigen Einheiten (102; 104) umfassen: zwei oder mehr erste blockförmige Einheiten, welche parallel zueinander angeordnet und an ihren Seitenflächen miteinander verbunden sind und deren Filterelemente (110; 112) in einer ersten Richtung münden, und
zwei oder mehr blockförmige Einheiten, welche parallel zueinander angeordnet und an ihren Seitenflächen miteinander verbunden sind und deren Filterelemente (110; 112) in einer zweiten Richtung münden,
wobei die ersten und die zweiten blockförmigen Einheiten (102; 104) Rücken an Rücken mit ihren austragseitigen Oberflächen und im Abstand voneinander und einander zugewandt angeordnet sind;
wobei das Filtermodul (100) ferner eine Reingas-Sammel- und -Austraganordnung (150) umfasst, welche sich über alle Reingasauslässe der Reingaskanäle erstreckt und eine Reingasaustragöffnung für das Filtermodul (100) bereitstellt, wobei die Reingas-Sammel- und -Austraganordnung (150) einen oder mehrere Reingaskanäle in Fluidverbindung mit den Reingasauslässen der Reingaskanäle (126; 128) umfasst, welche den Reingasstrom von den offenen Enden der Reingaskanäle (126; 128) in einer Richtung quer zur Vertikalen der austragseitigen Oberflächen umlenkt und richtet,
wobei die Reingas-Sammel- und -Austraganordnung (150) zwischen der ersten und der zweiten blockförmigen Einheit (102; 104) positioniert ist, so dass sie Reingas von der ersten und der zweiten blockförmigen Einheit (102; 104) aufnimmt;
wobei der eine oder die mehreren Kanäle der Reingas-Sammel- und -Austraganordnung (150) eine Höhe, gemessen als der Freiraum in der Richtung der Vertikalen der austragseitigen Oberflächen der blockförmigen Einheit(en), im Bereich des 0,2- bis 1,4-Fachen, vorzugsweise des ungefähr 0,6- bis ungefähr 1-Fachen der Länge der rohrförmigen Wandteile der Filterelemente (110; 112) aufweisen.

3. Filtermodul (10; 100) nach Anspruch 1 oder 2, wobei das Modul (10; 100) als ein Filtermodul vom Kerzen-Typ ausgebildet ist, welches an einem Ende desselben die von der Reingas-Sammel- und -Austraganordnung bereitgestellte Reingasaustragöffnung umfasst und vorzugsweise ferner an dem einen Ende einen Montageflansch (38; 158) umfasst.

4. Filtermodul (10; 100) nach einem der Ansprüche 1 bis 3, wobei die Reingaskanäle durch Längsschnitte rohrförmiger Wandteile von drei oder mehr der Filterelemente (14; 110; 112) definiert sind, wobei vorzugsweise die rohrförmigen Wandteile benachbarter Filterelemente in direktem Kontakt miteinander stehen und die Reingaskanäle zwischen ihren geschlossenen und offenen Enden begrenzen.

5. Filtermodul (10; 100) nach einem der Ansprüche 1 bis 4, wobei der Querschnitt der rohrförmigen Wandteile der Filterelemente (14; 110; 112) eine polygonale, kreisförmige oder ovale Gestalt aufweist.

6. Filtermodul (10; 100) nach einem der Ansprüche 1 bis 5, wobei die rohrförmigen Wandteile eine Querschnittsfläche aufweisen, welche zu der Fläche eines Quadrats mit einer Kantenlänge von ungefähr 5 bis ungefähr 10 mm korrespondiert.

7. Filtermodul (10; 100) nach einem der Ansprüche 1 bis 6, wobei die Länge der röhrenförmigen Wandteile der Filterelemente (14; 110; 112) ungefähr 50 bis ungefähr 150 mm beträgt.

8. Filtermodul (10; 100) nach einem der Ansprüche 1 bis 7, wobei die rohrförmigen Wandteile und optional die geschlossenen Enden der Filterelemente (14; 110; 112) und/oder die Reingaskanäle eine durchschnittliche Porengröße von ungefähr 0,1 bis ungefähr 150 µm, vorzugsweise von ungefähr 1 bis ungefähr 100 µm, weiter bevorzugt von ungefähr 2 bis ungefähr 10 µm aufweisen.

9. Filtermodul (10; 100) nach einem der Ansprüche 1 bis 8, wobei die rohrförmigen Wandteile und optional die geschlossenen Enden der Filterelemente (14; 110; 112) und/oder die Reingaskanäle aus einem keramischen Material, Metall oder einem Kunststoffmaterial hergestellt sind.

10. Filtermodul (10; 100) nach einem der Ansprüche 1 bis 9, wobei die rohrförmigen Wandteile der Filterelemente (14; 110; 112) mit Bezug auf die Vertikale der zufuhrseitigen Oberfläche des Filtermoduls in einem Winkel von ungefähr 10° bis ungefähr 60°, vorzugsweise von ungefähr 30° bis ungefähr 60°, angeordnet sind.

11. Filtermodul (10; 100) nach einem der Ansprüche 1 bis 10, wobei der eine oder die mehreren Kanäle der Reingas-Sammel- und -Austraganordnung mit ihrer Längsrichtung in einem Winkel von ungefähr 30° oder mehr, vorzugsweise ungefähr 60° oder mehr, weiter bevorzugt ungefähr 90° zu der Oberfläche der Austragseite des Filtermoduls ausgerichtet sind.

12. Filtermodul (10; 100) nach einem der Ansprüche 1 bis 11, wobei die blockförmigen Einheiten (12; 102; 104) ein Sicherungselement umfassen, welches sich über die offenen Enden der Reingaskanäle erstreckt.

13. Filtermodul (10; 100) nach einem der Ansprüche 1 bis 12, wobei der eine oder die mehreren Kanäle der Reingas-Sammel- und -Austraganordnung (32; 150) an einem Ende geschlossen und am gegenüberliegenden Ende offen sind und optional eine Querschnittsfläche aufweisen, welche ausgehend von dem geschlossenen Ende des einen oder der mehreren Kanäle hin zu dem offenen, gegenüberliegenden Ende des einen oder der mehreren Kanäle zunimmt.

14. Filtersystem (200; 300; 400), umfassend:
ein Gehäuse (202; 302; 402), welches eine Rohgas- und eine Reingaskammer sowie zwei oder mehr Filtermodule (204; 330; 430) nach einem der Ansprüche 1 bis 13 umfasst,
wobei das Gehäuse (202; 302; 402) des Filtersystems (200; 300; 400) einen Innenraum umfasst, welcher in eine Rohgas- und eine Reingaskammer unterteilt ist, wobei die Filtermodule innerhalb des Innenraums angeordnet sind, wobei die Zufuhrseite der Module im Wesentlichen vertikal orientiert sind, wobei die Zufuhrseiten der Filtermodule in Fluidverbindung mit der Rohgaskammer stehen und wobei die Reingasaustrag-öffnungen der Filtermodule in Fluidverbindung mit der Reingaskammer des Gehäuses stehen und wobei die Filtermodule in dem Gehäuse mit einer parallelen Orientierung ihrer Zufuhrseiten aufgenommen sind, wobei das System optional eine Rückspülanordnung (260; 350; 450) umfasst.

15. Filtersystem (300; 400) nach Anspruch 14, wobei das Gehäuse (302; 402) eine Rohrplatte (414) umfasst, welche das Innere des Gehäuses (302; 402) in die Rohgas- und in die Reingaskammer trennt, wobei die Rohrplatte (314; 414) Öffnungen umfasst, welche die zwei oder mehr Filtermodule (330; 430) aufnehmen, vorzugsweise in einer zueinander parallelen Ausrichtung.

16. Filtersystem (200; 300) nach Anspruch 14 oder 15, wobei die Zufuhrseite eines Filtermoduls der Austragseite eines benachbarten Moduls zugewandt ist, wobei die Filtermodule vorzugsweise in einer versetzten Konfiguration angeordnet sind.

17. Filtersystem (200; 400) nach Anspruch 14 oder 15, wobei die Zufuhrseiten eines Moduls der Zufuhrseite eines benachbarten Moduls zugewandt sind, wobei vorzugsweise das System ferner Trennplatten umfasst, welche zwischen zwei benachbarten Filtermodulen positioniert sind.

18. Filtersystem (200) nach einem der Ansprüche 14 bis 17, wobei zwei oder mehr Filtermodule in einem gemeinsamen Gestell (203) montiert sind und vorzugsweise deren Reingas-Sammel- und -Austraganordnungen fluidisch miteinander verbunden sind, wobei vorzugsweise das System einen Reingasaustragkanal umfasst, in welchen die AustragEnden der Reingas-Sammel- und -Austraganordnung das Reingas im Wesentlichen direkt einspeisen.

## Revendications

1. Module de filtre (10), particulièrement à des fins de filtration de gaz, le module de filtre (10) comprenant
deux unités en forme de bloc (12) ou plus disposées en parallèle et connectées les unes aux autres sur leurs faces latérales, chaque unité comprenant
plusieurs éléments de filtres (14) présentant une partie de paroi tubulaire poreuse, longitudinale (16) présentant une première extrémité ouverte (18) servant comme une entrée de gaz brut et une seconde extrémité fermée (20), dans lequel lesdits éléments de filtre (14) sont disposés de manière coextensive et dans une orientation parallèle avec leurs parties de parois tubulaires (16), leurs extrémités ouvertes (18) étant toutes disposées sur un côté du module de filtre (10) servant comme un côté d'alimentation de celui-ci, et
plusieurs conduits de gaz propre (22) qui sont essentiellement coextensifs avec, orientés parallèlement à, et régulièrement intercalés entre les éléments de filtres (14), les conduits de gaz propre (22) étant ouverts à une extrémité (24) formant une sortie de gaz propre et fermés à leur extrémité opposée (26),
alors que les extrémités fermées (26) des conduits de gaz propre (22) sont disposées sur le côté d'alimentation du module de filtre (10), et alors que leurs extrémités ouvertes (24) sont disposées à côté d'un côté d'évacuation du module de filtre (10) opposé au côté d'alimentation du module de filtre (10) ;
dans lequel lesdites extrémités ouvertes (18) des éléments de filtres (14) et lesdites extrémités fermées (26) des conduits de gaz propre (22) forment une surface latérale d'alimentation d'une unité en forme de bloc (12), et dans lequel lesdites extrémités ouvertes (24) des conduits de gaz propre (22) et lesdites extrémités fermées (20) des éléments de filtres (14) forment une surface latérale d'évacuation d'une unité en forme de bloc (12) ;
dans lequel les parties de parois tubulaires des éléments de filtres (14) présentent une surface transversale correspondant à la surface d'un carré avec une longueur de bord de 3 à 20 mm ; et dans lequel la longueur des parties de parois tubulaires des éléments de filtres (14) compte pour de 30 à 200 mm ;
ledit module de filtre (10) comprenant de plus sur le côté d'évacuation un dispositif de recueil et évacuation de gaz propre (32) s'étendant à travers toutes les sorties de gaz propre des conduits de gaz propre (22) de la une unité (12) ou plus et fournissant une ouverture d'évacuation de gaz propre (36) pour le module de filtre (10), ledit dispositif de recueil et évacuation de gaz propre (32) comprenant un ou plusieurs canaux de gaz propre en communication fluide avec lesdites sorties de gaz propre des conduits de gaz propre (22) déviant et dirigeant l'écoulement de gaz propre à partir des extrémités ouvertes des conduits de gaz propre (22) dans une direction transversale à la verticale de la surface latérale d'évacuation,
et dans lequel les uns ou plusieurs canaux du dispositif de recueil et évacuation de gaz propre (32) présentent une hauteur, mesurée comme l'espacement dans la direction de la verticale de la surface de côté latéral de l'(des) unité(s) en forme de bloc (12), dans l'intervalle de 0,3 à 0,5 fois la longueur des parties de parois tubulaires des éléments de filtres (14).

2. Module de filtre (100), particulièrement à des fins de filtration de gaz, le module de filtre (100) comprenant des unités en forme de bloc (102 ; 104), chaque unité (102 ; 104) comprenant
plusieurs éléments de filtres (110 ; 112) présentant une partie de paroi tubulaire poreuse, longitudinale (114 ; 116) présentant une première extrémité ouverte (118 ; 120) servant comme une entrée de gaz brut et une seconde extrémité fermée (122 ; 124), dans lequel lesdits éléments de filtres (110 ; 112) sont disposés de manière coextensive et dans une orientation parallèle avec leurs parties de parois tubulaires (114 ; 116), leurs extrémités ouvertes (118 ; 120) étant toutes disposées sur un côté du module de filtre (100) servant comme un côté d'alimentation de celui-ci, et
plusieurs conduits de gaz propre (126 ; 128) qui sont essentiellement coextensifs avec, orientés parallèlement à, et régulièrement intercalés entre les éléments de filtres (110 ; 112) ; les conduits de gaz propre (126 ; 128) étant ouverts à une extrémité formant une sortie de gaz propre et fermés à leur extrémité opposée,
alors que les extrémités fermées des conduits de gaz propre sont disposées sur un côté d'alimentation du module de filtre (100), et alors que leurs extrémités ouvertes sont disposées à côté d'un côté d'évacuation du module de filtre (100) opposé à un côté d'alimentation du module de filtre (100) ;
dans lequel lesdites extrémités ouvertes des éléments de filtres (110 ; 112) et lesdites extrémités fermées des conduits de gaz propre (126 ; 128) forment une surface latérale d'alimentation d'une unité en forme de bloc (102 ; 104), et dans lequel lesdites extrémités ouvertes des conduits de gaz propre (126 ; 128) et lesdites extrémités fermées des éléments de filtres (110 ; 112) forment une surface latérale d'évacuation d'une unité en forme de bloc (102 ; 104) ;
dans lequel les parties de parois tubulaires des éléments de filtres (110 ; 112) présentent une surface transversale correspondant à la surface d'un carré avec une longueur de bord de 3 à 20 mm ; et dans lequel la longueur des parties de parois tubulaires des éléments de filtres (110 ; 112) compte pour de 30 à 200 mm ;
dans lequel lesdites unités en forme de bloc (102 ; 104) comprennent deux premières unités en forme de bloc ou plus disposées en parallèle et connectées les unes aux autres sur leurs faces latérales, dont les éléments de filtres (110 ; 112) s'ouvrent dans une première direction et deux secondes unités en forme de bloc ou plus disposées en parallèle et connectées les unes aux autres sur leurs faces latérales, dont les éléments de filtres (110 ; 112) s'ouvrent dans une seconde direction,
les premières et secondes unités en forme de bloc (102 ; 104) étant disposées dos à dos avec leurs surfaces latérales d'évacuation et espacées les unes des autres et se faisant faces les unes aux autres ;
ledit module de filtre (100) comprenant de plus un dispositif de recueil et évacuation de gaz propre (150) s'étendant à travers tous les conduits de gaz propre des conduits de gaz propre et fournissant une ouverture d'évacuation de gaz propre pour le module de filtre (100), ledit dispositif de recueil et évacuation de gaz propre (150) comprenant un ou plusieurs canaux de gaz propre en communication fluide avec lesdites sorties de gaz propre des conduits de gaz propre (126 ; 128) déviant et dirigeant l'écoulement de gaz propre à partir des extrémités ouvertes des conduits de gaz propre (126 ; 128) dans une direction transversale à la verticale des surfaces latérales d'évacuation ;
ledit dispositif de recueil et évacuation de gaz propre (150) étant positionné entre lesdites premières et secondes unités en forme de bloc (102 ; 104) recevant du gaz propre des premières et secondes unités en forme de bloc (102 ; 104) ; les uns ou plusieurs canaux du dispositif de recueil et évacuation de gaz propre (150) présentant une hauteur, mesurée comme l'espacement dans la direction de la verticale des surfaces latérales d'évacuation de l'(des) unité(s) en forme de bloc, dans l'intervalle de 0,2 à 1,4 fois, de préférence d'environ 0,6 à environ 1 fois la longueur des parties de parois tubulaires des éléments de filtres (110 ; 112).

3. Module de filtre (10 ; 100) selon la revendication 1 ou 2, le module (10 ; 100) est conçu comme un module de filtre de type bougie, comprenant à une extrémité de celui-ci ladite ouverture d'évacuation de gaz propre fournie par le dispositif de recueil et évacuation de gaz propre, de préférence comprenant de plus à ladite une extrémité une bride de fixation (38 ; 158).

4. Module de filtre (10 ; 100) selon l'une quelconque des revendications 1 à 3, dans lequel les conduits de gaz propre sont définis par des sections longitudinales de parties de parois tubulaires de trois éléments de filtres (14 ; 110 ; 112) ou plus, de préférence dans lequel les parties de parois tubulaires d'éléments de filtres adjacents sont en contact direct les unes avec les autres délimitant les conduits de gaz propre entre leurs extrémités ouvertes et fermées.

5. Module de filtre (10 ; 100) selon l'une quelconque des revendications 1 à 4, dans lequel la section transversale des parties de parois tubulaires des éléments de filtres (14 ; 110 ; 112) est de forme polygonale, circulaire ou ovale.

6. Module de filtre (10 ; 100) selon l'une quelconque des revendications 1 à 5, dans lequel les parties de parois tubulaires présentent une surface transversale correspondant à la surface d'un carré avec une longueur de bord d'environ 5 à environ 10 mm.

7. Module de filtre (10 ; 100) selon l'une quelconque des revendications 1 à 6, dans lequel la longueur des parties de parois tubulaires des éléments de filtres (14 ; 110 ; 112) compte pour d'environ 50 à environ 150 mm.

8. Module de filtre (10 ; 100) selon l'une quelconque des revendications 1 à 7, dans lequel les parties de parois tubulaires et éventuellement les extrémités fermées des éléments de filtres (14 ; 110 ; 112) et/ou les conduits de gaz propre présentent une taille moyenne de pore d'environ 0,1 à environ 150 µm, de préférence d'environ 1 à environ 100 µm, encore mieux d'environ 2 à environ 10 µm.

9. Module de filtre (10 ; 100) selon l'une quelconque des revendications 1 à 8, dans lequel les parties de parois tubulaires et éventuellement les extrémités fermées des éléments de filtres (14 ; 110 ; 112) et/ou les conduits de gaz propre sont constitués d'un matériau céramique, de métal ou d'un matériau plastique.

10. Module de filtre (10 ; 100) selon l'une quelconque des revendications 1 à 9, dans lequel les parties de parois tubulaires des éléments de filtres (14 ; 110 ; 112) sont disposées par rapport à la verticale de la surface latérale d'alimentation du module de filtre à un angle d'environ 10° à environ 60°, de préférence d'environ 30° à environ 60°.

11. Module de filtre (10 ; 100) selon l'une quelconque des revendications 1 à 10, dans lequel les uns ou plusieurs canaux du dispositif de recueil et évacuation de gaz propre sont orientés avec leur direction longitudinale dans un angle d'environ 30° ou supérieur, de préférence d'environ 60° ou supérieur, encore mieux d'environ 90° par rapport à la surface du côté d'évacuation du module de filtre.

12. Module de filtre (10 ; 100) selon l'une quelconque des revendications 1 à 11, dans lequel les unités en forme de bloc (12 ; 102 ; 104) comprennent un élément de fusible de sécurité s'étendant à travers les extrémités ouvertes des conduits de gaz propre.

13. Module de filtre (10 ; 100) selon l'une quelconque des revendications 1 à 12, dans lequel les uns ou plusieurs canaux du dispositif de recueil et évacuation de gaz propre (32 ; 150) sont fermés à une extrémité et ouverts à l'extrémité opposée et présentent éventuellement une section transversale qui augmente à partir de l'extrémité fermée du(des) canal(canaux) jusqu'à l'extrémité ouverte, opposée du(des) canal(canaux).

14. Système de filtre (200 ; 300 ; 400) comprenant
un boîtier (202 ; 302 ; 402) comprenant une chambre de gaz brut et une de gaz propre ainsi que deux modules de filtres (204 ; 330 ; 430) ou plus selon l'une quelconque des revendications 1 à 13,
ledit boitier (202 ; 302 ; 402) du système de filtre (200 ; 300 ; 400) comprenant un espace intérieur séparé en une chambre de gaz brut et une de gaz propre, lesdits modules de filtres étant disposés à l'intérieur dudit espace intérieur, le côté d'alimentation des modules orienté essentiellement verticalement, lesdits côtés d'alimentation des modules de filtres étant en communication fluide avec la chambre de gaz brut et lesdites ouvertures d'évacuation de gaz propre des modules de filtres étant en communication fluide avec la chambre de gaz propre du boîtier, et dans lequel les modules de filtres sont logés dans le boîtier avec une orientation parallèle de leurs côtés d'alimentation, le système comprenant éventuellement un dispositif d'impulsions retour (260 ; 350 ; 450).

15. Système de filtre (300 ; 400) selon la revendication 14, dans lequel le boîtier (302 ; 402) comprend une plaque tubulaire (414) séparant l'intérieur du boîtier (302 ; 402) en la chambre de gaz brut et de gaz propre, ladite plaque tubulaire (314 ; 414) comprenant des ouvertures logeant les deux modules de filtres (330 ; 430) ou plus, de préférence dans une orientation parallèle les uns aux autres.

16. Système de filtre (200 ; 300) selon la revendication 14 ou 15, dans lequel le côté d'alimentation d'un module fait face au côté d'évacuation d'un module adjacent, les modules de filtres étant disposés de préférence dans une configuration échelonnée.

17. Système de filtre (200 ; 400) selon la revendication 14 ou 15, dans lequel les côtés d'alimentation d'un module font face au côté d'alimentation d'un module adjacent, de préférence le système comprend de plus des plaques de division positionnées entre deux modules de filtres adjacents.

18. Système de filtre (200) selon l'une quelconque des revendications 14 à 17, dans lequel deux modules de filtres ou plus sont montés dans une armoire commune (203) et présentent de préférence leurs dispositifs de recueil et évacuation de gaz propre connectés de manière fluide les uns aux autres, de préférence le système comprend un canal d'évacuation de gaz propre dans lequel les extrémités d'évacuation des dispositifs de recueil et évacuation de gaz propre introduisent substantiellement directement le gaz propre.
